(19) Europäisches Patentamt
European Patent Office
Office européen des brevets

(11) Veröffentlichungsnummer : **0 042 556**
**B1**

(12) # EUROPÄISCHE PATENTSCHRIFT

(45) Veröffentlichungstag der Patentschrift : **08.02.84**

(21) Anmeldenummer : **81104531.9**

(22) Anmeldetag : **12.06.81**

(51) Int. Cl.³ : **C 09 B 26/02**, C 09 B 26/04, C 09 B 41/00, D 06 P 1/41, D 21 H 1/46

(54) **Verfahren zur Herstellung kationischer Alkylarylhydrazonfarbstoffe und deren Farbbasen.**

(30) Priorität : **25.06.80 DE 3023854**

(43) Veröffentlichungstag der Anmeldung : **30.12.81 Patentblatt 81/52**

(45) Bekanntmachung des Hinweises auf die Patenterteilung : **08.02.84 Patentblatt 84/06**

(84) Benannte Vertragsstaaten : **BE CH DE FR GB IT LI**

(56) Entgegenhaltungen :
**DE-A- 1 083 000**
**DE-A- 2 043 192**
**DE-A- 2 139 311**
**FR-A- 2 012 262**
**FR-A- 2 102 335**
**BERICHTE DER DEUTSCHEN CHEMISCHEN GESELLSCHAFT, Band 57, 1924, Verlag Chemie, Seiten 144-149 Weinheim, DE. W. KÖNIG et al.: "Beiträge zum Mechanismus der Diazo-Kupplungsreaktion, IV: Über Azofarbstoffe aus Trialkyl-alpha methylen-indolinen"**

**Die Akte enthält technische Angaben, die nach dem Eingang der Anmeldung eingereicht wurden und die nicht in dieser Patentschrift enthalten sind.**

(73) Patentinhaber : **BAYER AG**
**Zentralbereich Patente, Marken und Lizenzen**
**D-5090 Leverkusen 1, Bayerwerk (DE)**

(72) Erfinder : **Raue, Roderich, Dr.**
**Berta-von-Suttner-Strasse 48**
**D-5090 Leverkusen 1 (DE)**
Erfinder : **Kühlthau, Hans-Peter, Dr.**
**Paul-Klee-Strasse 48**
**D-5090 Leverkusen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 042 556 B1

Verfahren zur Herstellung kationischer Alkylarylhydrazonfarbstoffe und deren Farbbasen

Die vorliegende Erfindung betrifft ein Verfahren zur Herstellung von Farbstoffen der allgemeinen Formel

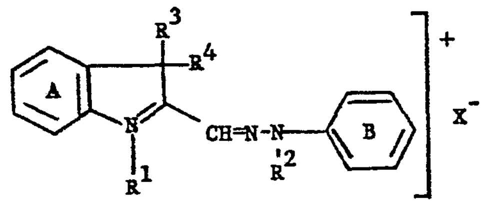

(I)

worin

$R^1$ und $R^2$ Wasserstoff, Alkyl, Alkenyl oder Aralkyl bedeuten, wobei $R^1$ nur dann für Wasserstoff steht, wenn $R^2$ für Wasserstoff steht,

$R^3$ und $R^4$ Methyl oder Ethyl und

$X^-$ ein Anion bedeuten und worin

die Ringe A und B und die Reste $R^1$ und $R^2$ nichtionische Substituenten und

die Ringe A und B weitere ankondensierte Ringe tragen können,

oder von deren Farbbasen der allgemeinen Formel

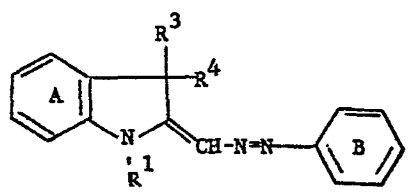

(II)

dadurch gekennzeichnet, daß man in Gegenwart einer Säure ein Amin der Formel

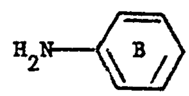

(III)

und eine Verbindung der Formeln

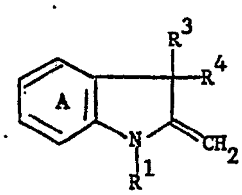

(IVa),

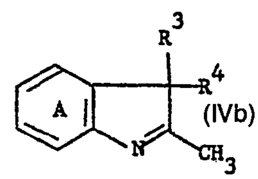

(IVb) oder

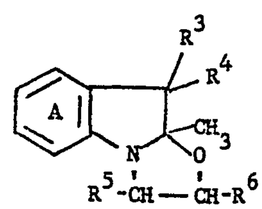

(IVc),

worin

$R^1$, $R^3$, $R^4$, A und B die oben angegebenen Bedeutungen haben,

$R^5$ und $R^6$ für Wasserstoff, Alkyl, Alkoxy, Phenoxy oder Phenyl stehen,

mit einer salpetrige Säure abgebenden Substanz zur Reaktion bringt und dann gegebenenfalls nach bekannten Verfahren mit einer Verbindung umsetzt, welche die Reste $R^1$ und/oder $R^2$, die für gegebenenfalls durch nichtionische Reste substituiertes Alkyl, Alkenyl oder Aralkyl stehen, und $X^-$ bildet.

Unter nichtionischen Substituenten sind im Sinne der vorliegenden Erfindung die in der Farbstoffchemie üblichen und unter gebräuchlichen Herstellungs- und Verwendungsbedingungen nicht dissoziierenden Substituenten zu verstehen, wie Halogen, z. B. Fluor, Chlor, Brom, Hydroxy, Alkyl, Alkenyl, Aryl, Aralkyl, Aryloxy, Alkoxy oder Hydroxyalkoxy, Cycloalkoxy, Aralkoxy, Aryloxyalkoxy, Alkylthio, Aralkylthio, Arylthio, Nitro, Cyan, Formyl, Alkylcarbonyl, Arylcarbonyloxy, Alkylcarbonyloxy, Alkoxycarbonyloxy, Alkylcarbonylamino, Alkylaminocarbonyloxy, Alkylsulfonylamino, Ureido, N-Alkyl-ureido, Aryloxycarbonylamino, Alkoxycarbonylamino, Carbamoyl, N-Alkyl-carbamoyl, N,N-Dialkyl-carbamoyl, N-Alkyl-N-arylcarbamoyl, Sulfamoyl, N-Alkyl-sulfamoyl, N,N-Dialkyl-sulfamoyl, Alkylsulfonyl, Alkenylsulfonyl, Arylsulfonyl, Aralkylsulfonyl, Aryloxysulfonyl, Aryloxycarbonyl, Alkoxycarbonyl, Aralkoxycarbonyl, Mono-Di- oder Trialkylsulfamidin, Alkylarylsulfamidin, Alkylcycloalkylsulfamidin und Arylazo. Auch Polyglykoletherreste mit Halogen-, Hydroxy- oder Alkyloxysubstituenten sind geeignet.

In den Formeln und in den vorstehend genannten nichtionischen Substituenten sind unter Alkylresten insbesondere $C_1$- bis $C_8$-Alkylreste und unter Alkenylresten insbesondere $C_3$- bis $C_5$-Alkenylreste zu verstehen.

Geeignete Arylreste sind insbesondere der Phenyl- oder Naphthylrest.

Geeignete Aralkylreste sind insbesondere der Benzyl-, α- oder ß-Phenylethyl-, α-, β- oder γ-Phenylpropylrest. Unter Cycloalkyl wird vorzugsweise Cyclohexyl verstanden. Durch Ankondensation weiterer Ringe an die Ringe A und B entstehen beispielsweise Naphthalin-, Tetralin- oder Benzodioxansysteme.

Die aliphatischen und isocyclischen Reste können ihrerseits die vorstehend genannten nichtionischen Substituenten tragen.

Als anionische Reste $X^-$ kommen die für kationische Farbstoffe üblichen organischen und anorganischen Anionen in Betracht.

Das Anion ist im allgemeinen durch das Herstellungsverfahren und die eventuell vorgenommene Reinigung oder Ausfällung des rohen Farbstoffes gegeben. Im allgemeinen liegen die Farbstoffe als Halogenide — insbesondere als Chloride oder Bromide — oder als Methosulfate, Ethosulfate, Sulfate, Benzol- oder Toluolsulfonate oder als Acetate vor. Die Anionen können in bekannter Weise gegen andere Anionen ausgetauscht werden.

Das Verfahren ist besonders geeignet zur Herstellung von Farbstoffen der Formel

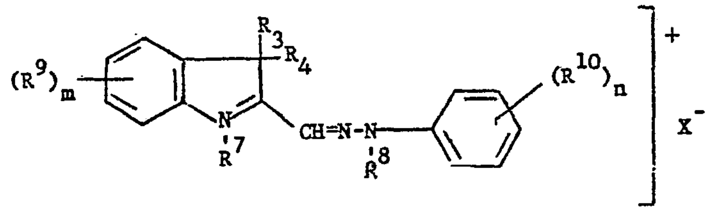

(V)

worin

$R^3$, $R^4$ und $X^-$ die gleiche Bedeutung wie in Formel I haben, und

$R^7$ für Wasserstoff oder Alkyl mit 1 bis 4 Kohlenstoffatomen, das durch Halogen, Hydroxy, Cyan, $C_1$- bis $C_4$-Alkoxy, $C_1$- bis $C_4$-Alkylcarbonyloxy, Phenoxy oder Phenyl substituiert sein kann, und

$R^8$ für Wasserstoff oder Alkyl mit 1 bis 4 Kohlenstoffatomen, das durch Hydroxy substituiert sein kann, stehen, wobei $R^7$ nur dann für Wasserstoff steht, wenn $R^8$ für Wasserstoff steht,

$R^9$ und $R^{10}$ für Wasserstoff, Halogen, Alkyl oder Alkoxy mit 1 bis 4 C-Atomen, Benzyl-, Benzoloxy-, Phenyl- oder Phenyloxyreste, die wiederum durch Halogen, Alkyl oder Alkoxy mit 1 bis 4 C-Atomen substituiert sein können, Acetyl, Benzoyl oder für Carbonsäureester mit 1 bis 4 C-Atomen oder

$R^{10}$ für Phenylazo oder zusammen mit dem Benzolring für ein Tetralin-, Naphthalin- oder Benzdioxanringsystem und

m und n für 1 oder 2 stehen,

oder von Farbbasen solcher Salze der Formel V, worin

$R^8$ für Wasserstoff steht,

durch Umsetzung eines Amins der Formel

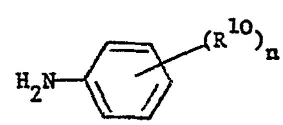

(VI)

und einer Verbindung der Formeln

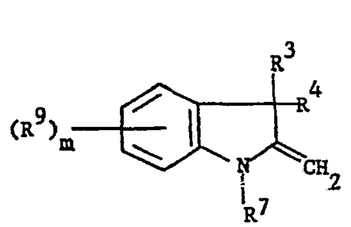

(VIIa),

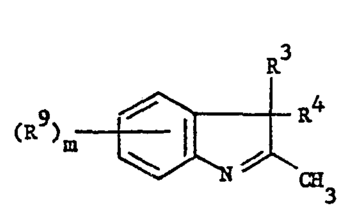

(VIIb) oder

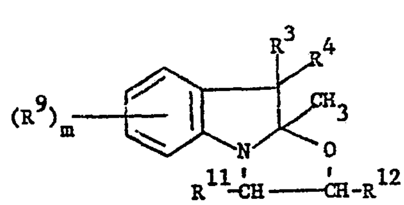

(VIIc),

worin

$R^3$, $R^4$, $R^7$ bis $R^{10}$, m und n die vorstehend genannte Bedeutung haben und

$R^{11}$ und $R^{12}$ für Wasserstoff, Alkyl oder Alkoxy mit 1 bis 4 Kohlenstoffatomen, Phenyl oder Phenoxy stehen,

mit einer salpetrige Säure abgebenden Substanz und dann gegebenenfalls Umsetzung nach bekannten Verfahren mit einer Verbindung, welche die Reste $R^7$ und/oder $R^8$, und $X^-$ bildet.

Von den Verbindungen der Formeln V, VI und VII sind insbesondere solche zu nennen, worin

m für 1,

n für 1 oder 2,

$R^3$ und $R^4$ für Methyl,

$R^7$ für Methyl, Ethyl, Acetoxyethyl oder Hydroxyethyl,

$R^8$ für Wasserstoff, Methyl oder Hydroxyethyl,

$R^9$ für H, $C_1$- bis $C_4$-Alkyl, $C_1$- bis $C_4$-Alkoxy, $C_1$- bis $C_2$-Alkoxycarbonyl, Chlor, Nitro und Benzyloxy,

$R^{10}$ für H, $C_1$- bis $C_4$-Alkyl, $C_1$- bis $C_4$-Alkoxy, Hydroxy-$C_2$- bis -$C_4$-alkoxy, Hydroxy-$C_2$- bis -$C_4$-alkyloxy-$C_2$- bis -$C_4$-alkoxy, Chlor, $C_1$- bis $C_4$-Alkoxy-$C_2$- bis -$C_4$-alkoxy, Phenoxy, Benzyloxy, Benzyl oder Phenylazo stehen oder

$R^{10}$ zusammen mit dem Benzolring ein Naphthalin- oder Benzdioxansystem bildet und

$R^{11}$ und $R^{12}$ Wasserstoff oder Methyl bedeuten.

In einer besonders bevorzugt herstellbaren Gruppe von Farbstoffen der Formel V bedeuten

m und n 1,

$R^3$, $R^4$ und $R^7$ Methyl,

$R^8$ Wasserstoff oder Methyl,

$R^9$ und $R^{10}$ Wasserstoff, Chlor, Methyl, Ethyl, Methoxy oder Ethoxy.

Sie werden aus den Verbindungen VI und VIIa hergestellt.

Bei der gleichzeitigen Umsetzung von Aminen der Formel III und Verbindungen der Formeln IV mit salpetriger Säure hat sich ein großer pH-Bereich als geeignet erwiesen. Die Reaktion liefert bei pH-Werten unter 6 besonders zufriedenstellende Ergebnisse ; so läßt sie sich beispielsweise in verdünnter Schwefelsäure — also bei pH-Werten von 2 und darunter — durchführen. Auch höhere pH-Werte sind gut geeignet. Ein besonders bevorzugtes Verfahren ist dadurch gekennzeichnet, daß man in Wasser ein Amin III, eine salpetrige Säure bildende Substanz, eine Kupplungskomponente der Formeln IV und soviel einer Säure mischt, daß ein pH-Wert von $4 < pH < 6$ eingestellt wird.

Die Verbindungen III und IV werden bevorzugt in äquimolaren Mengen eingesetzt.

Geeignete salpetrige Säure abgebende Substanzen sind beispielsweise Kaliumnitrit, Methylnitrit, Amylnitrit und vor allem Natriumnitrit.

Als Säuren sind anorganische Säuren, insbesondere Schwefelsäure, und organische Säuren, insbesondere aliphatische Carbonsäuren mit 1 bis 4 Kohlenstoffatomen, wie Ameisensäure, Essigsäure, Propionsäure, Chloressigsäure, Dichloressigsäure, Trichloressigsäure, Bromessigsäure, Milchsäure, β-Chlor-propionsäure, Methoxyessigsäure und Ethoxyessigsäure geeignet. Bevorzugt unter diesen Carbonsäuren sind die Essigsäure und die Ameisensäure.

Die Reaktion läßt sich bei − 10 bis + 75 °C, insbesondere bei 0 bis 60 °C durchführen. Im allgemeinen erfolgt die Einwirkung der salpetrigen Säure bei 0 bis 20 °C. Gegen Ende der Reaktion kann die Temperatur bis über 60 °C ansteigen.

Die Herstellung wurde bisher durch Diazotieren der aromatischen Amine in salzsaurer Lösung, Zugabe der Diazoniumsalzlösung zum heterocyclischen Quartärsalz und Kuppeln durch Zugabe von säurebindenden Mitteln (B. 57, 144, 1924) durchgeführt. Demgegenüber stellt das erfindungsgemäße Verfahren eine wesentliche Vereinfachung dar.

Aus der DE-A-2 139 311 ist die Herstellung von Azofarbstoffen durch eine 1-stufige Diazotierung/Kupplung bekannt. Aus der Lehre dieser Offenlegungsschrift konnte jedoch nicht geschlossen werden, daß die Reaktion erfolgreich auf die Herstellung von Hydrazonfarbstoffen übertragen werden kann. Es ist nämlich auch bekannt, daß 1,3,3-Trimethyl-2-methylen-indolin gelöst in Eisessig in glatter Reaktion das 1,3,3-Trimethyl-2-formoxin-indoleniniumsalz bildet (Kuhn, Winterstein und Balser, B. 63, 3182, 1930). Es ist deshalb außerordentlich überraschend, daß nach dem erfindungsgemäßen Verfahren durch gleichzeitige Diazotierung und Kupplung Reaktionsprodukte in sehr hoher Reinheit und Ausbeute erhalten werden.

Gegenstand der Erfindung ist auch die Herstellung von gebrauchsfertigen Lösungen von Farbstoffen der Formel I, worin

$R^2$ für Wasserstoff und

$X^-$ für das Anion einer aliphatischen Säure mit 1 bis 4 Kohlenstoffatomen stehen.

Sie werden nach einer bevorzugten Verfahrensweise hergestellt, indem man das Mengenverhältnis zwischen den Reaktionspartnern und aliphatischen Carbonsäuren oder deren Mischungen so wählt, daß am Ende der Einwirkung von Natriumnitrit unmittelbar eine stabile Lösung der Farbstoffe der Formel I entsteht. Auf 1 mol der Verbindungen III bzw. IV setzt man 5 bis 20 mol einer aliphatischen Carbonsäure ein, bevorzugt sind 7 bis 12 mol. Diese Farbstofflösungen sind in besonderem Maße geeignet zum Färben von Papier in klaren gelben bis roten Farbtönen. Die Umsetzung zu fertigen Farbstofflösungen hat den

Vorteil, daß bei der Herstellung kein Abwasser entsteht.

Nach einem weiteren besonders bevorzugten Verfahren verwendet man 1 bis 2,5 mol der aliphatischen Carbonsäure in verdünnter Lösung, die Lösungsmittel, Wasser oder Lösungsmittel/Wasser-Gemische enthält. Dabei stellt sich ein pH-Wert von $4 < pH < 6$ ein. Nach Einwirkung von Natriumnitrit fällt dann der Farbstoff in der Form der Farbbase II aus. Diese Farbbasen lassen sich in bekannter Weise, wie in der DE-C-1 083 000 beschrieben, nach der Isolierung durch Einwirkung von Alkylierungsmitteln in die alkylierten Hydrazonfarbstoffe überführen.

Die Hydrazonfarbstoffe I (mit $R^1$ und $R^2$ verschieden von Wasserstoff) können aber auch nach einem weiteren bevorzugten erfindungsgemäßen Verfahren dadurch hergestellt werden, daß man die bei der Umsetzung von Verbindungen III und IV und salpetriger Säure erhaltenen Lösungen bzw. Suspensionen gegebenenfalls neutralisiert und ohne Isolierung der Farbbase gegebenenfalls mit einem mit Wasser nicht mischbaren Lösungsmittel verdünnt, gegebenenfalls die wäßrige Phase abscheidet und dann nach bekannten Verfahren mit Quaternierungsmitteln, welche die Reste $R^1$, $R^2$ und X abzugeben bzw. zu bilden vermögen, und — falls sie das Anion $X^-$ nicht bilden — in Gegenwart einer das Anion $X^-$ liefernden Säure umsetzt und die Farbstoffe gegebenenfalls isoliert.

Überraschend wurde gefunden, daß die aus nicht isolierten Farbbasen hergestellten Farbstoffe der Formel I hervorragend zum Färben von sauer modifizierten Textilien geeignet sind. Die Klarheit der dabei erzielten Farbtöne entspricht derjenigen von Farbstoffen der Formel I, die auf übliche Weise aus vorher isolierten Farbbasen der Formel II hergestellt werden.

Ein besonders bevorzugtes Verfahren ist dadurch gekennzeichnet, daß man in Wasser ein Amin III, eine salpetrige Säure bildende Substanz, eine Kupplungskomponente der Formel IV und soviel einer Säure mischt, daß ein pH-Wert von $4 < pH < 6$ eingestellt wird, nach Ende der Umsetzung die Reaktionsmischung gegebenenfalls mit einem mit Wasser nicht mischbaren Lösungsmittel verdünnt, gegebenenfalls neutralisiert bzw. alkalisch stellt, vorzugsweise das Wasser abtrennt und dann mit einem Alkylierungsmittel bzw. Aralkylierungsmittel umsetzt. Während der Quaternierung hält man den pH-Wert der Mischung bei mittleren Werten, etwa bei 2-11, vorzugsweise bei 6-9.

Geeignete Lösungsmittel sind beispielsweise: Benzol, Toluol, Chloroform, 1,2-Dichlor-propan, Chlorbenzol, Dichlor-benzol, Nitrobenzol, 1,2-Dichlor-ethan.

Geeignete Alkylierungs- bzw. Aralkylierungsmittel sind z. B.: Ester, wie Dimethylsulfat, Diethylsulfat, Benzolsulfonsäuremethylester, p-Toluolsulfonsäuremethylester; Halogenverbindungen, wie Butylbromid, Benzylbromid, Benzylchlorid; Epoxide, wie Ethylenoxid, Propylenoxid, Epichlorhydrin, Butylenoxid, Ethyloxypropylenoxid in Gegenwart von Säuren.

Die Alkylierung kann auch in Gegenwart alkalischer Mittel, z. B. in Gegenwart tertiärer Amine, die am N-Atom raumfüllend substituiert sind, gemäß der belgischen Patentschrift 735 565 durchgeführt werden. Als raumfüllend substituiertes Amin eignet sich besonders Tris-(hydroxypropyl)-amin.

Gut geeignet sind auch Alkali- und Erdalkalicarbonate, z. B. basisches Magnesiumcarbonat, oder Oxide, wie Magnesiumoxid.

Die Quaternierung wird vorzugsweise bei 30 bis 120 °C durchgeführt. Im allgemeinen werden die Reaktionen dieses Verfahrens in der ersten Phase unter Kühlung begonnen, dann wird bei Raumtemperatur oder erhöhter Temperatur ausgekuppelt, und danach werden die Reaktionen des Verfahrens durch Alkylieren bzw. Aralkylieren unter Erwärmen abgeschlossen.

Man kann so vorgehen, daß man das neue Verfahren durch gleichzeitige Diazotierung eines Amins III und Kupplung auf eine Kupplungskomponente IV bei − 10 °C bis 15 °C, beispielsweise bei 10 °C, beginnt und die Kupplung durch langsames Erwärmen auf 15 bis 75 °C, beispielsweise auf 60 °C, zu Ende führt, dann die Mischung neutralisiert, wobei man Lösungsmittel, wie z. B. Chlorbenzol, zugibt, bei etwa 60 bis 80 °C das Wasser abscheidet, was zur Vermeidung von Verlusten an Quaternierungsmittel vorteilhaft ist, eine Base, wie z. B. MgO oder basisches Magnesiumcarbonat, zugibt und dann Dimethylsulfat eindosiert, wobei man eine Temperatur von 30-60 °C, z. B. 40 °C, einhält. Eine Zugabe von Wasser, beispielsweise 1-3 mol $H_2O$ auf 1 mol Farbstoff, gegen Ende der Quaternierung fördert Löslichkeit und Reaktionsgeschwindigkeit und senkt infolge Hydratbildung den Schmelzpunkt des Farbstoffes. I. Auf diese Weise gelangt man also zu Farbstoffen der Formel I, deren Anion das Methylsulfatanion ist. Sie liegen als Lösungen oder Suspensionen in den eingesetzten Lösungsmitteln vor, welche man in gewohnter Weise mit Wasserdampf abtreiben und dann aus den Rückständen die Farbstoffe der Formel I aussalzen kann.

Überraschend erhält man jedoch auch die Farbstoffe I in hoher Reinheit, wenn man die erfindungsgemäß hergestellten Suspensionen bzw. Lösungen zur Trockne eindampft. Auch die so isolierten Farbstoffe I ergeben gleich gute Färbeergebnisse wie die auf übliche Weise aus vorher isolierten Farbbasen II hergestellten Farbstoffe. Dabei ist es vorteilhaft, die nach der Quaternierung erhaltenen Lösungen bzw. Suspensionen vor dem Eindampfen zur Trockne zur Entfernung der nicht verbrauchten Reste an Dimethylsulfat und basischen Zusätzen mit saurem Wasser bei beispielsweise 60-90 °C zu verrühren. Dabei tritt Trennung in wäßrige und organische Phase ein, wobei die wäßrige Phase weitgehend frei von Farbstoff ist und zur Entfernung von Fremdsalzen vorteilhaft abgetrennt wird. Anschließend wird die organische Phase zur Trockne eingedampft. Statt Wasser kann man zum Ausrühren auch eine wäßrige Salzlösung, z. B. Natriumchloridlösung, einsetzen und so den Farbstoff mit einem anderen Anion versehen. Die quantitative Einführung anderer, beispielsweise in der DE-B-22 55 058, Spalte 4-6, aufgeführter Anionen gelingt nach gekannten Arbeitsweisen. Auch den bei einer Wasserdampfdestillation erhaltenen Rückstand kann man z. B. in einem Schaufeltrockner zur Trockne eindampfen und erhält so die Farbstoffe I in ausgezeichneter Qualität.

Die durch Abpressen der Mutterlauge oder durch Eindampfen isolierten Farbstoffe I sind gut zur Einstellung von flüssigen Färbepräparationen geeignet, da sie sich gut in mit Wasser mischbaren Lösungsmitteln zu stabilen Lösungen auflösen.

Das erfindungsgemäße Verfahren ist sehr gut zur Herstellung besonders hochkonzentrierter flüssiger Farbstoffeinstellungen geeignet, wenn man, wie oben beschrieben, die nach der Quaternierung erhaltenen Lösungen bzw. Suspensionen der Farbstoffe I mit saurem Wasser ausrührt, das Wasser abtrennt und dann die organische Phase in Gegenwart von frischem Wasser mit der zur Überführung der Farbstoffe I in die Farbstoffhydroxide notwendigen Menge Natronlauge verrührt. Dann trennt man das Wasser erneut ab, überführt das sich in der organischen Phase befindliche Farbstoffhydroxid durch Eintropfen einer Säure, beispielsweise Essigsäure, in ein leichtlösliches Salz und destilliert dann das Lösungsmittel unter vermindertem Druck ab. Den Rückstand verdünnt man mit Essigsäure, Wasser, Emulgatoren und mit Wasser mischbaren Lösungsmitteln auf die gewünschte Farbstärke und erhält so stabile Farbstofflösungen mit einem Farbstoffgehalt von über 50 %.

Andere Quaternierungsmittel als Dimethylsulfat fordern teilweise höhere Reaktionstemperaturen, beispielsweise bis 90 °C. Die Quaternierung mit Epoxiden erfolgt im sauren pH-Bereich. Die Zugabe der Reagentien ist an keine bestimmte Reihenfolge gebunden. Man kann z. B. Amine III und $NaNO_2$ in Wasser vorlegen, dann ein Gemisch einer Komponente IV mit soviel Essigsäure eintropfen, daß ein pH-Wert unter 6, jedoch über 4 eingestellt wird, und nach Beendigung der Umsetzung quaternieren. Ebenso kann man z. B. in Wasser nahezu äquivalente Mengen Eisessig, Amin III und Kupplungskomponente IV vorlegen und dazu wäßrige Natriumnitritlösung tropfen. Als zweckmäßig hat sich bei diesem Verfahren erwiesen, anschließend noch soviel Eisessig einzutropfen, daß ein pH-Wert von ca. 5 eingestellt wird. Die dazu notwendige Essigsäure kann auch mit vorgelegt werden.

Da mit fortschreitender Reaktion die oft flüssige Kupplungskomponente IV einem Feststoff Platz macht, das Reaktionsmedium also steifer wird, wird zweckmäßigerweise soviel Wasser eindosiert, daß eine gute Rührbarkeit erhalten bleibt. Man kann während der Kupplung auch eines der vorstehend erwähnten Lösungsmittel zugeben, um eine gute Rührbarkeit zu gewährleisten.

Wenn man, wie vorstehend erläutert, die gleichzeitige Umsetzung der Komponenten III und IV mit salpetriger Säure im schwach essigsauren Bereich vornimmt, kann man überraschenderweise vor der Quaternierung auf eine Neutralisation des Reaktionsgemisches verzichten, da die zu quaternierenden Verbindungen als Farbbasen II vorliegen.

Arbeitet man dagegen bei niedrigeren pH-Werten, verwendet man z. B. Schwefelsäure statt Essigsäure, muß, wie oben erwähnt, neutralisiert werden, um die Quaternierung durchführen zu können.

Geeignete aromatische Amine der Formel III sind beispielsweise : Anilin, 2-Methyl-anilin, 4-Methyl-anilin, 2,4-Dimethyl-anilin, 3-Methyl-anilin, 4-Chlor-anilin, 2-Chlor-anilin, 4-Anisidin, 2-Anisidin, 4-Phenetidin, 2-Phenetidin, 4-Amino-benzoesäureethylester, 4-Amino-diphenylether, 4-Aminophenylbenzylether, 4-Aminophenyl-4'-chlorbenzyl-ether, 4-Aminophenyl-4'-methoxybenzyl-ether, 4-Amino-azobenzol, 4,β-Hydroxyethoxy-anilin, 4,β-Methoxyethoxy-anilin, 4-(Hydroxyethoxyethoxy)-anilin, 4,β-Hydroxy-n-propoxy-anilin, 4-(β-Hydroxy-γ-chlorpropoxy)-anilin, 4-Amino-brenzcatechinethylenether, 6-Amino-benzdioxan. Weitere Amine III sind z. B. in der DE-B-20 40 872 in den Spalten 6, 7 und 8 genannt. Geeignete Kupplungskomponenten der Formel IVa sind z. B. : 1,3,3-Trimethyl-2-methylen-2,3-dihydro-indol, 1-Ethyl-3,3-dimethyl-2-methylen-2,3-dihydro-indol, 1 β-Acetoxyethyl-3,3-dimethyl-2-methylen-2,3-dihydro-indol. Weitere geeignete Kupplungskomponenten sind z. B. in der DE-B-20 40 872 in den Spalten 8, 9 und 10 genannt.

Geeignete Kupplungskomponenten der Formel IVb sind 2,3,3-Trimethyl-indolenin und seine den vorgenannten Beispielen analogen Substitutionsprodukte.

Geeignete Verbindungen der Formel IVc sind :

9,9,9a-Trimethyl-2,3,9,9a-tetrahydro-oxazolo-[3,2a]-indol,
7,9,9,9a-Tetramethyl-2,3,9,9a-tetrahydro-oxazolo-[3,2a]-indol,
7-Chlor-9,9,9a-trimethyl-2,3,9,9a-tetrahydro-oxazolo-[3,2a]-indol,
7-Methoxy-9,9,9a-trimethyl-2,3,9,9a-tetrahydro-oxazolo-[3,2a]-indol,
7-Ethyl-9,9,9a-trimethyl-2,3,9,9a-tetrahydro-oxazolo-[3,2a]-indol,
9,9-Diethyl-9a-methyl-2,3,9,9a-tetrahydro-oxazolo-[3,2a]-indol,
2,9,9,9a-Tetramethyl-2,3,9,9a-tetrahydro-oxazolo-[3,2a]-indol,
3,9,9,9a-Tetramethyl-2,3,9,9a-tetrahydro-oxazolo-[3,2a]-indol,
9,9,9a-Trimethyl-2-phenoxy-2,3,9,9a-tetrahydro-oxazolo-[3,2a]-indol,
9,9,9a-Trimethyl-2-phenoxymethylen-2,3,9,9a-tetrahydro-oxazolo-[3,2a]-indol,
9,9,9a-Trimethyl-2-chlormethyl-2,3,9,9a-tetrahydro-oxazolo-[3,2a]-indol,
7,9,9,9a-Tetramethyl-2-phenoxymethyl-2,3,9,9a-tetrahydro-oxazolo-[3,2a]-indol,
9,9,9a-Trimethyl-2-ethoxymethyl-2,3,9,9a-tetrahydro-oxazolo-[3,2a]-indol,
9,9,9a-Trimethyl-2-(n-propoxymethyl)-2,3,9,9a-tetrahydro-oxazolo-[3,2a]-indol,
7-Chlor-9,9,9a-trimethyl-2-methoxymethyl-2,3,9,9a-tetrahydro-oxazolo-[3,2a]-indol,
9,9,9a-Trimethyl-3-chlormethyl-2,3,9,9a-tetrahydro-oxazolo-[3,2a]-indol.

Beispiel 1

12,3 g 4-Anisidin und 17,3 g 1,3,3-Trimethyl-2-methylen-indolin werden in 50 ml Eisessig gelöst, wobei die Temperatur bis auf 42 °C ansteigt. Nach Abkühlen auf 5 °C tropft man 7,3 g Natriumnitrit, gelöst in 15 ml Wasser, unter Kühlen zu. Man läßt das Reaktionsgemisch zunächst unter Kühlung und dann ohne Bad nachrühren, wobei die Temperatur für kurze Zeit bis auf 40 °C ansteigt. Nach mehrstündigem Rühren erhält man eine klare Lösung des Farbstoffes der Formel :

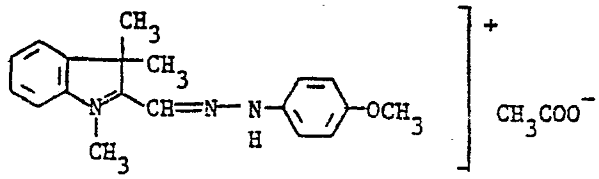

Diese Lösung färbt holzschliffhaltiges Papier in einem rotstichigen Orange an.

Verwendet man als aromatisches Amin anstelle von 4-Anisidin die gleiche Menge 2-Anisidin so erhält man eine Farbstofflösung, die holzschliffhaltiges Papier in einem gelbstichigen Orange anfärbt.

Beispiel 2

12,3 g p-Anisidin und 20,3 g 5-Methoxy-1,3,3-trimethyl-2-methylen-indolin werden in 50 ml Eisessig gelöst. Die Temperatur steigt hierbei bis auf 45 °C an. Nachdem man die Reaktionsmischung auf 5 °C abgekühlt hat, tropft man 7,3 g Natriumnitrit, gelöst in 15 ml Wasser, bei 5 °C ein. Nach 5-stündigem Rühren erhält man eine klare Farbstofflösung, mit der man holzschliffhaltiges Papier in einem gelbstichigen Rot anfärbt.

Verwendet man anstelle von 4-Anisidin die gleiche Menge 2-Anisidin, so erhält man eine Farbstofflösung, die holzschliffhaltiges Papier in einem rotstichigen Orange anfärbt.

Beispiel 3

10,7 g 4-Toluidin und 17,3 g 1,3,3-Trimethyl-2-methylen-indolin werden in 50 ml Eisessig gelöst, wobei die Temperatur bis auf 42 °C ansteigt. Nach Abkühlen auf 5 °C tropft man 7,3 g Natriumnitrit, gelöst in 15 ml Wasser, unter Kühlen ein. Man läßt 5 h bei Raumtemperatur nachrühren und erhält eine klare Lösung, mit der man auf holzschliffhaltigem Papier eine rotstichig gelbe Färbung erhält.

Verwendet man anstelle von 1,3,3-Trimethyl-2-methylen-indolin 20,8 g 5-Chlor-1,3,3-trimethyl-2-methylen-indolin und verfährt sonst in gleicher Weise, so erhält man eine Farbstofflösung, die holzschliffhaltiges Papier gelbstichig orange anfärbt.

Beispiel 4

9,3 g Anilin und 17,3 g 1,3,3-Trimethyl-2-methylen-indolin werden in 50 ml Eisessig gelöst, wobei die Temperatur bis auf 45 °C ansteigt. Nach Abkühlen auf 5 °C tropft man 7,3 g Natriumnitrit, gelöst in 15 ml Wasser, unter Kühlen ein und setzt das Kühlen auch zu Beginn des Nachrührens fort. Nach 5 h erhält man eine klare Lösung, die holzschliffhaltiges Papier rotstichig gelb anfärbt.

Verwendet man anstelle von Anilin 12,7 g 2-Chlor-anilin und verfährt sonst in gleicher Weise, so erhält man eine Farbstofflösung, die holzschliffhaltiges Papier rotstichig gelb anfärbt.

Die mit 4-Chlor-anilin erhaltene Lösung färbt holzschliffhaltiges Papier in einem gelbstichigen Orange an.

Beispiel 5

13,7 g 4-Phenetidin und 17,3 g 1,3,3-Trimethyl-2-methylen-indolin werden in 70 ml Eisessig gelöst, wobei die Temperatur bis auf 46 °C ansteigt. Nach Abkühlen auf 5 °C tropft man 7,3 g Natriumnitrit, gelöst in 15 ml Wasser, bei 5 °C ein. Zu Beginn des Nachrührens kühlt man etwas und läßt dann noch 4 h bei Raumtemperatur rühren. Die Farbstofflösung färbt holzschliffhaltiges Papier in einem stark rotstichigen Orange an.

Verwendet man anstelle von p-Phenetidin die gleiche Menge o-Phenetidin und 50 ml Eisessig, so erhält man eine Farbstofflösung, die holzschliffhaltiges Papier orange färbt.

Beispiel 6

12,1 g 4-Amino-1,3-dimethyl-benzol und 17,3 g 1,3,3-Trimethyl-2-methylenindolin werden in 50 ml Eisessig gelöst, wobei die Temperatur bis auf 46 °C ansteigt. Nach Abkühlen auf 5 °C tropft man 7,3 g Natriumnitrit, gelöst in 15 ml Wasser, bei 5 °C ein. Zu Beginn des Nachrührens setzt man noch 25 ml

Eisessig zu und erhält eine Farbstofflösung, die holzschliffhaltiges Papier in einem gelbstichigen Orange anfärbt.

Beispiel 7

12,3 g 4-Anisidin und 20,8 g 5-Chlor-1,3,3-trimethyl-2-methylen-indolin werden in 50 ml Eisessig gelöst, wobei die Temperatur bis auf 40 °C ansteigt. Man läßt das Reaktionsgemisch auf 5 °C abkühlen und tropft 7,3 g Natriumnitrit, gelöst in 15 ml Wasser, bei 5 °C zu. Nach 5 stündigem Rühren erhält man eine stabile Farbstofflösung. Holzschliffhaltiges Papier wird in einem gelbstichigen Rot angefärbt.

Beispiel 8

10,7 g o-Toluidin und 17,3 g 1,3,3-Trimethyl-2-methylen-indolin werden in 50 ml Eisessig gelöst. Die Temperatur steigt auf 45 °C an. Nach Abkühlen auf 5 °C tropft man 7,3 g Natriumnitrit, gelöst in 15 ml Wasser, bei 5 °C ein und setzt vor Beginn des Nachrührens noch 10 ml Eisessig zu. Nach 5 stündigem Nachrühren erhält man eine Farbstofflösung, die holzschliffhaltiges Papier in einem stark rotstichigen Gelb anfärbt.

Verwendet man anstelle von 2-Toluidin die gleiche Menge 3-Toluidin und verfährt sonst in gleicher Weise, so erhält man auf holzschliffhaltigem Papier ein gedecktes gelbstichiges Orange.

Beispiel 9

15,3 g 2-(4-Amino-phenoxy)-ethanol und 17,3 g 1,3,3-Trimethyl-2-methylenindolin werden in 50 ml Eisessig gelöst, wobei die Temperatur bis auf 40 °C ansteigt. Nach Abkühlen auf 5 °C tropft man 7,3 g Natriumnitrit, gelöst in 15 ml Wasser, bei 5 °C ein. Man läßt 5 h nachrühren, wobei man zu Beginn etwas kühlt, und erhält dann eine Farbstofflösung, die holzschliffhaltiges Papier in einem rotstichigen Orange anfärbt.

Setzt man anstelle von 1,3,3-Trimethyl-2-methylen-indolin 20,3 g 5-Methoxy-1,3,3-trimethyl-2-methylen-indolin ein und verfährt sonst in gleicher Weise, so erhält man eine Farbstofflösung, die holzschliffhaltiges Papier gelbstichig rot anfärbt.

Beispiel 10

9,3 g Anilin und 20,3 g 5-Methoxy-1,3,3-trimethyl-2-methylen-indolin werden in 50 ml Eisessig gelöst, wobei die Temperatur bis auf 45 °C ansteigt. Nach Abkühlen auf 5 °C tropft man 7,3 g Natriumnitrit, gelöst in 15 ml Wasser, bei 5 °C ein und rührt 5 h bei Raumtemperatur nach. Man erhält eine Farbstofflösung, die holzschliffhaltiges Papier gelbstichig orange färbt.

Verwendet man anstelle von Anilin 12,7 g 2-Chlor-anilin und verfährt sonst in gleicher Weise, so erhält man ebenfalls eine Farbstofflösung, die holzschliffhaltiges Papier gelbstichig orange anfärbt.

Mit 4-Chlor-anilin als Aminokomponente erhält man auf holzschliffhaltigem Papier ein klares Orange.

Beispiel 11

10,7 g 4-Toluidin und 20,3 g 5-Methoxy-1,3,3-trimethyl-2-methylenindolin werden in 50 ml Eisessig gelöst, wobei die Temperatur bis auf 42 °C ansteigt. Nach Abkühlen auf 5 °C tropft man 7,3 g Natriumnitrit, gelöst in 15 ml Wasser, bei 5 °C ein und setzt vor Beginn des Nachrührens noch 50 ml Eisessig zu. Nach 5 stündigem Nachrühren erhält man eine Lösung, die holzschliffhaltiges Papier in einem klaren Orange anfärbt.

Verwendet man anstelle von p-Toluidin 13,7 g p-Phenetidin, so ist kein Nachsatz von Eisessig erforderlich, und man erhält eine Farbstofflösung, die holzschliffhaltiges Papier in einem gelbstichigen Rot anfärbt.

Der Farbstoff mit 4-Amino-1,3-dimethyl-benzol färbt holzschliffhaltiges Papier rotstichig orange.

Beispiel 12

10,7 g 2-Toluidin und 20,3 g 5-Methoxy-1,3,3-trimethyl-2-methylen-indolin werden in 50 ml Eisessig gelöst, wobei die Temperatur bis auf 43 °C ansteigt. Nach Abkühlen auf 5 °C werden 7,3 g Natriumnitrit, gelöst in 15 ml Wasser, eingetropft und 5 h bei Raumtemperatur nachgerührt. Man erhält eine Farbstofflösung, die holzschliffhaltiges Papier in einem gelbstichigen Orange anfärbt.

Verwendet man anstelle von 2-Toluidin 13,7 g 2-Phenetidin und verfährt sonst in gleicher Weise, so erhält man eine Farbstofflösung, die holzschliffhaltiges Papier rotstichig orange färbt.

Beispiel 13

Man verrührt unter Stickstoff 400 ml Wasser mit 120 g Eisessig und 123 g 4-Anisidin, dann kühlt man

auf 10 °C ab und rührt 173 g 1,3,3-Trimethyl-2-methylen-indolin ein. Bei 10 °C wird innerhalb von 1 h eine Lösung von 70 g Natriumnitrit in 90 ml Wasser eingetropft. Anschließend läßt man die Temperatur innerhalb von 1 h auf 15 °C und innerhalb der nächsten 50 min auf 19 °C ansteigen. Dann entfernt man das Kühlbad. Die Suspension erwärmt sich jetzt unter exothermer Reaktion. Nach etwa 20-30 min wird eine Innentemperatur von 30-35 °C erreicht. Bei 31-33 °C gibt man 250 ml Wasser von 30-35 °C zu. Die Temperatur steigt innerhalb der nächsten 10 min auf 55-60 °C. Sobald die Temperatur nicht mehr weiter steigt, rührt man noch 5 min nach, preßt ab und wäscht mit Wasser salzfrei. Der Gehalt der Suspension an 1,3,3-Trimethyl-2-methylen-indolin und 4-Anisidin liegt unter 0,1 %. Die Ausbeute beträgt 299 g 97,6 %ig = 291,6 g 100 % Farbbase der Formel :

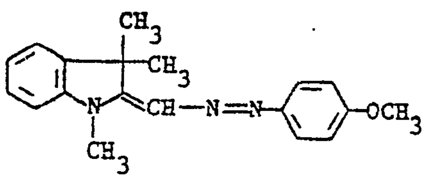

Beispiel 14

Man löst 123 g p-Anisidin in 400 ml Wasser und 60 g Eisessig und rührt dann unter Kühlen 173 g 1,3,3-Trimethyl-2-methylen-indolin ein. Anschließend wird bei 0 °C innerhalb von ca. 1 h eine Lösung von 70 g Natriumnitrit in 90 ml Wasser eingetropft. Dann tropft man binnen 1 h noch 60 g Eisessig hinzu, wonach sich ein pH-Wert von 5,9 einstellt. Die Reaktionsmischung wird 1 h bei 0 °C und dann — nach langsamen Erwärmen — über Nacht bei Raumtemperatur nachgerührt. Der Gehalt an 1,3,3-Trimethyl-2-methylen-indolin und p-Anisidin in der Suspension liegt unter 0,1 %. Der pH-Wert beträgt 4,8. Man saugt ab, wäscht mit Wasser salzfrei und erhält nach Trocknen 295 g 98,9 %ige Farbbase der in Beispiel 13 angegebenen Formel.

Beispiel 15

20,3 g 9,9,9a-Trimethyl-2,3,9,9a-tetrahydro-oxazolo-[3,2a]-indol und 12,3 g 2-Anisidin werden in 50 ml Eisessig gelöst. Nach Abkühlen auf 5 °C tropft man eine Lösung von 7,3 g Natriumnitrit in 15 ml Wasser ein. Beim Nachrühren steigt die Temperatur bis auf 26 °C an und wird durch Kühlen wieder auf 15 °C gebracht. Dann läßt man über Nacht rühren und erhält eine klare Farbstofflösung, mit der man holzschliffhaltiges Papier orange anfärbt.

Verwendet man anstelle von 2-Anisidin äquimolekulare Mengen von 2-Toluidin oder 4-Toluidin und verfährt sonst in gleicher Weise, so erhält man gleichfalls stabile Farbstofflösungen, die holzschliffhaltiges Papier rotstichig gelb anfärben.

Beispiel 16

23,3 g 7-Methoxy-9,9,9a-trimethyl-2,3,9,9a-tetrahydro-oxazolo-[3,2a]-indol und 12,3 g 2-Anisidin werden in 50 ml Eisessig gelöst, wobei die Temperatur bis auf 37 °C ansteigt. Nach Abkühlen auf 5 °C tropft man 7,3 g Natriumnitrit, gelöst in 15 ml Wasser, ein, wobei die Temperatur bis auf 28 °C ansteigt. Man kühlt wieder auf 15 °C ab und läßt die Farbstofflösung dann über. Nacht bei Raumtemperatur rühren. Die rückstandsfreie Lösung färbt holzschliffhaltiges Papier rotstichig orange.

Setzt man anstelle von 2-Anisidin die äquimolekularen Mengen von 2-Toluidin bzw. 4-Toluidin ein und verfährt sonst in gleicher Weise, so erhält man gleichfalls stabile Farbstofflösungen, die holzschliffhaltiges Papier orange färben.

Beispiel 17

12,3 g 4-Anisidin und 17,3 g 1,3,3-Trimethyl-2-methylen-indolin werden in 50 ml Ameisensäure gelöst, wobei die Temperatur bis auf 61 °C ansteigt. Nach Abkühlen auf 5 °C tropft man eine Lösung von 7,3 g Natriumnitrit in 15 ml Wasser ein und läßt das Reaktionsgemisch 12 h bei Raumtemperatur nachrühren. Man erhält eine klare Farbstofflösung, die holzschliffhaltiges Papier rotstichig orange anfärbt.

Setzt man anstelle von 4-Anisidin die gleiche Menge 2-Anisidin ein und verfährt sonst in gleicher Weise, so erhält man eine Farbstofflösung, die holzschliffhaltiges Papier gelbstichig orange färbt.

Beispiel 18

12,3 g 2-Anisidin und 17,3 g 1,3,3-Trimethyl-2-methylen-indolin werden in 50 ml Milchsäure gelöst, wobei die Temperatur bis auf 40 °C ansteigt. Nach Abkühlen auf 5 °C tropft man 7,3 g Natriumnitrit, gelöst in 15 ml Wasser, bei 5 °C ein. Man läßt das Reaktionsgemisch über Nacht bei Raumtemperatur rühren und erhält so eine Farbstofflösung, die holzschliffhaltiges Papier gelbstichig orange färbt.

Gleichfalls stabile Farbstofflösungen erhält man, wenn man anstelle von Milchsäure Dichloressigsäure, Ethoxyessigsäure, Propionsäure oder 2-Chlor-propionsäure verwendet.

Beispiel 19

10,7 g 2-Toluidin und 17,3 g 1,3,3-Trimethyl-2-methylen-indolin werden in 50 ml Ameisensäure gelöst, wobei die Temperatur bis auf 50 °C ansteigt. Nach Abkühlen auf 5 °C tropft man 7,3 g Natriumnitrit, gelöst in 15 ml Wasser, bei 5 °C ein und läßt das Reaktionsgemisch nachrühren. Hierbei steigt die Temperatur zunächst auf 28 °C an. Nach Abkühlen auf 15 °C läßt man bei Raumtemperatur weiter rühren und erhält nach mehrstündigem Rühren eine klare Farbstofflösung, die holzschliffhaltiges Papier rotstichig gelb anfärbt.

Mit gleichem Erfolg läßt sich auch Milchsäure oder Propionsäure anstelle von Ameisensäure einsetzen.

Beispiel 20

Man verrührt unter Stickstoff 400 ml Wasser mit 120 g Eisessig und 123 g p-Anisidin. Dann kühlt man auf 10 °C ab und rührt 173 g 1,3,3-Trimethyl-2-methylen-indolin ein. Bei 10 °C wird in 1 h eine Lösung von 70 g Natriumnitrit in 90 ml Wasser eingetropft. Anschließend läßt man die Temperatur innerhalb von 1 h auf 15 °C und binnen der nächsten 50 min auf 19 °C ansteigen. Dann entfernt man das Kühlbad. Die Suspension erwärmt sich jetzt unter exothermer Reaktion. Nach etwa 20-30 min wird eine Innentemperatur von 30-35 °C erreicht. Bei 33 °C beginnt man 50 ml Chlorbenzol mit steigender Geschwindigkeit so einzutropfen, daß bei Erreichen von 50 °C ca. 10 ml Lösungsmittel, bei Erreichen von 60 °C etwa 20-30 ml und bei Erreichen der bei etwa 61-62 °C liegenden Maximaltemperatur 40-50 ml eingetropft sind. Es wird 5 min nachgerührt. Der Gehalt an 1,3,3-Trimethyl-2-methylen-indolin und p-Anisidin in der Suspension liegt bei 0,1 % oder darunter. Zu der Suspension gibt man 450 ml Chlorbenzol, erhitzt auf 80 °C, setzt den Rührer still und hebert das Wasser (oben) ab. Die organische Phase kühlt man auf 40 °C ab, gibt 6 g Magnesiumoxid hinzu, tropft bei 40 °C innerhalb von 1 h 134 g Dimethylsulfat und binnen der nächsten Stunde 18 g Wasser ein. Anschließend rührt man 6 h bei 40 °C nach. Währenddessen werden nach ca. 2 h nochmals 20 g Dimethylsulfat zugesetzt. Hiernach liegt der Gehalt an unquaterniertem Farbstoff in der Suspension unter 0,03 %. Nach Zugabe von 200 ml Wasser stellt man den pH-Wert mit konz. Salzsäure auf einen Wert zwischen 5 und 2,5. Dann treibt man das Lösungsmittel mit Wasserdampf ab. Das Volumen des Destillationsrückstandes liegt bei 1 100 ml. Man kann ihn, falls gewünscht, mit Aktivkohle klären. Man rührt 15 g eines aromatischen Polyglykolethers ein und streut, sobald die Mischung auf 48-50 °C abgekühlt ist, 55 g Siedesalz ein. Nach Rühren bei Raumtemperatur über Nacht wird abgepreßt und mit 750 ml 5 %iger Siedesalzlösung gewaschen. Man erhält den Farbstoff der Formel

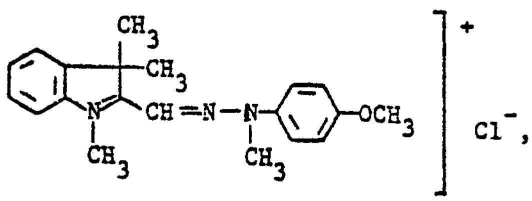

der Polyacrylnitril goldgelb färbt. Er ist chromatographisch reiner als ein Präparat, das durch Quaternieren einer nach geläufigen Verfahren hergestellten und isolierten Farbbase der Formel

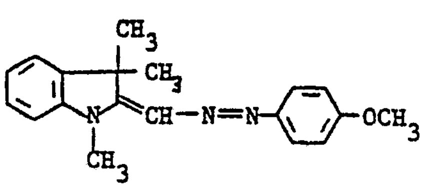

hergestellt wurde.

Setzt man in analoger Arbeitsweise statt p-Anisidin und 1,3,3-Trimethyl-2-methylen-indolin die in folgender Tabelle aufgeführten aromatischen Amine und 2-Methylen-indoline miteinander um, erhält man Farbstoffe, die Polyacrylnitril in den angegebenen Farbtönen färben :

(Siehe Tabelle, Seite 11 f.)

| Aromatisches Amin | 2-Methylen-indolin | Farbton auf PAC |
|---|---|---|
| o-Anisidin | 1,3,3-Trimethyl-2-methylen-indolin | grünst. Gelb |
| 6-Amino-benzo-dioxan | " | Goldgelb |
| p-Toluidin | " | Gelb |
| o-Toluidin | " | grünst. Gelb |
| m-Toluidin | " | Gelb |
| p-Phenetidin | " | Goldgelb |
| o-Phenetidin | " | grünst. Gelb |
| 4-Amino-1,3-dimethyl-benzol | " | Gelb |
| 2-Chlor-anilin | " | grünst. Gelb |
| 4-Chlor-anilin | " | Gelb |
| 4-Aminophenylglykolether | " | Goldgelb |
| Anilin | " | Gelb |
| p-Anisidin | 1,3,3-Trimethyl-5-methoxy-2-methylen-indolin | gelbst. Orange |
| p-Anisidin | 1,3,3-Trimethyl-5-chlor-2-methylen-indolin | gelbst. Orange |
| " | 1,3,3-Trimethyl-5-carbometh-oxy-2-methylen-indolin | Orange |
| " | 1,3,3-Trimethyl-5-nitro-2-methylen-indolin | Orange |
| " | 1 ß-Acetyloxyethyl-3,3-di-methyl-2-methylen-indolin | Goldgelb |
| " | 9,9,9a-Trimethyl-2,3,9,9a-tetrahydro-oxazolo-[3,2a]-indol | Goldgelb |

Beispiel 21

Man arbeitet wie in Beispiel 20. Nachdem der pH-Wert auf 2,5 bis 5 gestellt wurde, dampft man das Gemisch unter reduziertem Druck zur Trockne ein. So erhält man das Methosulfat des in Beispiel 20 beschriebenen Farbstoffes. Seine Ausfärbung auf Polyacrylnitril entspricht in Farbton und Klarheit derjenigen eines nach geläufigem Verfahren aus isolierter Farbbase hergestellten Präparates.

Beispiel 22

Man arbeitet wie in Beispiel 20. Nachdem der pH-Wert auf 2,5 bis 5 gestellt wurde, rührt man 58 g Natriumchlorid und 100 ml gesättigte Siedesalzlösung ein, erhitzt auf 70 °C und trennt die wäßrige Schicht ab. Die organische Schicht wird im Schaufeltrockner zur Trockne eingedampft. Man erhält ein orangerotes Pulver, welches hauptsächlich das Chlorid des in Beispiel 20 beschriebenen Farbstoffes darstellt und zum Färben von sauer modifizierten Synthesefasern gleich gut wie das in Beispiel 21 beschriebene Präparat geeignet ist.

Beispiel 23

Man arbeitet wie in Beispiel 22. Der beim Eindampfen erhaltene Rückstand wird in 342 g Eisessig, 162 g Propylenglykol, 760 g Ethylenglykol und 100 g Wasser gelöst. Man erhält eine stabile Lösung, die als flüssiges Färbepräparat zum Färben sauer modifizierter Synthesefasern geeignet ist.

Beispiel 24

Man arbeitet wie in Beispiel 20 jedoch wird statt Chlorbenzol 1,2-Dichlorpropan eingesetzt. Die Temperatur wird höchstens auf 70 °C, nicht auf 80 °C, angehoben. Nachdem der pH-Wert auf 2,5 bis 5 eingestellt wurde, wird die wäßrige Schicht abgehebert. Dann gibt man 100 ml Wasser zu und tropft bei 20 °C 100 g 45 %ige Natronlauge ein. Nach 3 stündigem Nachrühren hat sich ein pH-Wert von 9-10 eingestellt. Man hebert das überstehende Wasser ab, versetzt die organische Schicht mit 150 g Eisessig und dampft sie unter vermindertem Druck soweit ein, daß kein Dichlorpropan mehr enthalten ist. Den Rückstand verdünnt man mit einem mit Wasser mischbaren Lösungsmittel oder Lösungsmittelgemisch (geeignet sind z. B. Glykole, Glykolester, Alkylglykolester, Glycerinester), mit Essigsäure und mit einem Emulgator (geeignet sind z. B. Phenolpolyglykolether, wie Nonylphenolpolyglykolether) und verdünnt die Lösung mit soviel Wasser, daß man eine Flüssigeinstellung erhält, die doppelt so farbstark ist, wie die in Beispiel 23 erhaltene. Sie ist stabil und gut zum Färben sauer modifizierter Synthesefasern geeignet.

Beispiel 25

Man arbeitet zunächst wie in Beispiel 20. Wenn die Kupplung beendet ist, gibt man wie dort 450 ml Chlorbenzol zu, kühlt auf 20 °C ab und stellt bei dieser Temperatur den pH-Wert, der bei 4,9 liegt, durch Eintropfen von 45 %igen Natronlauge auf 7. Dann erhitzt man die Mischung auf 80 °C, setzt den Rührer still und läßt das Wasser unten ab. Die organische Phase kühlt man auf 40 °C ab, gibt 2,4 g MgO zu und verfährt dann weiter wie in Beispiel 20. Man erhält ein ebenso gutes Ergebnis wie in Beispiel 20.

Beispiel 26

Man löst 123 g p-Anisidin in 400 ml Wasser und 306 g 48 %iger Schwefelsäure und rührt dann unter Kühlen 159 g 2,3,3-Trimethyl-indolenin ein. Anschließend wird bei 0 °C innerhalb von 2 h eine Lösung von 70 g Natriumnitrit in 90 ml Wasser eingetropft. Man rührt 1 h bei 0 °C nach und läßt dann die Temperatur innerhalb von 4 h langsam auf 20 °C ansteigen. Dann wird über Nacht bei Raumtemperatur gerührt. Anschließend gibt man 400 ml 1,2-Dichlor-propan und 200 ml Wasser zu und tropft 45 %ige Natronlauge ein, bis ein pH-Wert von 7 bestehen bleibt. Währenddessen erwärmt man langsam auf 60 °C. Die wäßrige Schicht wird abgetrennt. Zur organischen Phase gibt man 26 g Magnesiumoxid und tropft dann bei 45 °C 268 g Dimethylsulfat binnen 3 h ein. Anschließend werden innerhalb von 1 h bei 40 °C 36 g Wasser eingetropft. Man rührt 5 h bei 45 °C, gibt 400 ml Wasser zu und stellt den pH-Wert mit wenig Salzsäure auf 2,5-5 ein. Dann wird die wäßrige Schicht bei 60 °C abgetrennt und verworfen. Aus der organischen Phase wird das Lösungsmittel mit Wasserdampf abgetrieben. Den Destillationsrückstand verdünnt man mit Wasser auf 200 ml, gibt 30 g eines aromatischen Polyglykolethers hinzu und streut bei ca. 50 °C 100 g Siedesalz ein. Nach Rühren bei Raumtemperatur über Nacht wird abgepreßt und mit 1 l 5 %iger Siedesalzlösung gewaschen. Man erhält den in Beispiel 20 beschriebenen Farbstoff.

Beispiel 27

Man löst 93 g Anilin in 400 ml Wasser und 204 g 48 %iger Schwefelsäure und rührt dann zu der beim Abkühlen erhaltenen Suspension 173 g 1,3,3-Trimethyl-2-methylen-indolin. Anschließend wird bei 0 °C in 1 h eine Lösung von 70 g $NaNO_2$ in 90 ml Wasser eingetropft. Man rührt 1 h bei 0 °C nach, läßt dann die Temperatur der Suspension innerhalb der nächsten 4 h langsam auf 20 °C ansteigen, verdünnt mit 100 ml Wasser und rührt bei Raumtemperatur über Nacht. Dann setzt man 500 ml Chlorbenzol zu und stellt den pH-Wert durch Eintropfen von 45 %iger Natronlauge auf 7. Dann erhitzt man die Mischung auf 80 °C, setzt den Rührer still und läßt das Wasser ab. Die organische Phase kühlt man auf 50 °C ab, gibt 2,5 g MgO zu und verfährt weiter wie in Beispiel 20. Man erhält den Farbstoff der Formel

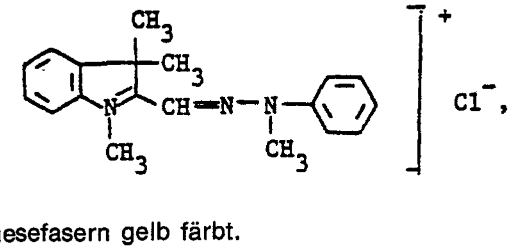

der sauer modifizierte Synthesefasern gelb färbt.

Beispiel 28

Polyacrylnitrilfasern werden bei 40 °C im Flottenverhältnis 1 : 40 in ein wäßriges Bad eingebracht, das pro Liter 0,75 g 30 %ige Essigsäure, 0,38 g Natriumacetat und 0,2 g des in Beispiel 22 beschriebenen Destillationsrückstandes enthält. Man erhitzt innerhalb von 20-30 min zum Sieden und hält das Bad 30-60 min bei dieser Temperatur. Nach dem Spülen und Trocknen erhält man eine klare goldgelbe Färbung mit sehr guten Echtheitseigenschaften.

Beispiel 29

Man arbeitet wie in Beispiel 14, doch setzt man statt 400 ml Wasser 50 ml Methanol ein. Die Suspension enthält nach Ende der Reaktion unter 0,05 % 1,3,3-Trimethyl-2-methylen-indolin und p-Anisidin. Sie wird mit 400 ml Wasser verdünnt. Der pH-Wert liegt dann bei 4,7. Man erhält 292,9 g der in Beispiel 13 beschriebenen Farbbase.

**Ansprüche**

1. Verfahren zur Herstellung von Farbstoffen der allgemeinen Formel

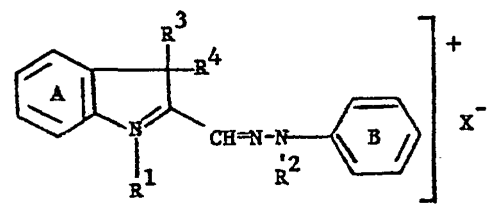

oder von Farbbasen der allgemeinen Formel

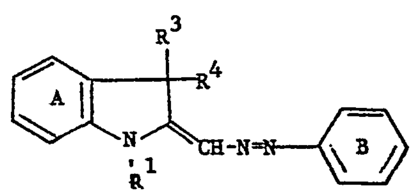

worin

$R^1$ und $R^2$ Wasserstoff, Alkyl, Alkenyl oder Aralkyl bedeuten, wobei $R^1$ nur dann für Wasserstoff steht, wenn $R^2$ für Wasserstoff steht,

$R^3$ und $R^4$ Methyl oder Ethyl und

$X^-$ ein Anion bedeuten und worin

die Ringe A und B und die Reste $R^1$ und $R^2$ nichtionische Substituenten und

die Ringe A und B weitere ankondensierte Ringe tragen können,

dadurch gekennzeichnet, daß man in Gegenwart einer Säure ein Amin der Formel

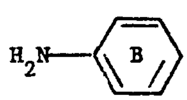

worin

B die oben angegebene Bedeutung besitzt,

und eine Verbindung der Formeln

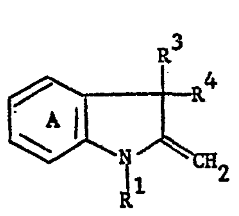

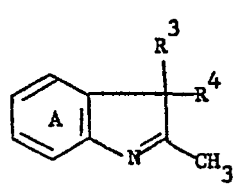

oder

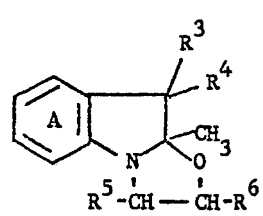

worin

$R^1$, $R^3$, $R^4$ und A die oben angegebenen Bedeutungen haben,

$R^5$ und $R^6$ für Wasserstoff, Alkyl, Alkoxy, Phenoxy oder Phenyl stehen,

mit einer salpetrige Säure abgebenden Substanz zur Reaktion bringt und dann gegebenenfalls nach bekannten Verfahren mit einer Verbindung umsetzt, welche die Reste $R^1$ und/oder $R^2$, die für gegebenenfalls durch nichtionische Reste substituiertes Alkyl, Alkenyl oder Aralkyl stehen, und $X^-$ bildet.

2. Verfahren zur Herstellung von Farbstoffen der allgemeinen Formel

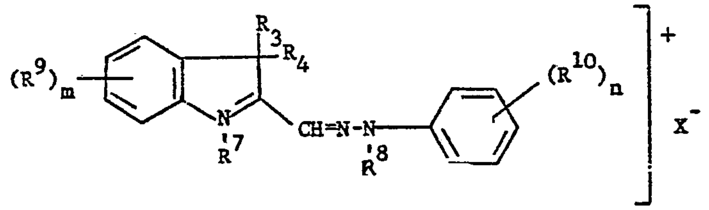

oder von Farbbasen der Formel

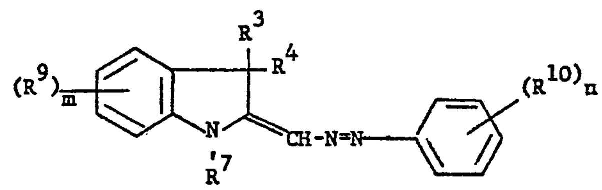

worin

$R^3$, $R^4$ und $X^-$ die gleiche Bedeutung wie in Anspruch 1 haben,

$R^7$ für Wasserstoff oder Alkyl mit bis 4 Kohlenstoffatomen, das durch Halogen, Hydroxy, Cyan, $C_1$- bis $C_4$-Alkoxy, $C_1$- bis $C_4$-Alkylcarbonyloxy, Phenoxy oder Phenyl substituiert sein kann, und

$R^8$ für Wasserstoff oder Alkyl mit 1 bis 4 Kohlenstoffatomen, das durch Hydroxy substituiert sein kann stehen, wobei $R^7$ nur dann für Wasserstoff steht, wenn $R^8$ für Wasserstoff steht,

$R^9$ und $R^{10}$ für Wasserstoff, Halogen, Alkyl oder Alkoxy mit 1 bis 4 C-Atomen, Benzyl-, Benzyloxy-, Phenyl- oder Phenyloxyreste, die wiederum durch Halogen, Alkyl oder Alkoxy mit 1 bis 4 C-Atomen substituiert sein können, Acetyl, Benzoyl oder für Carbonsäureester mit 1 bis 4 C-Atomen oder

$R^{10}$ für Phenylazo oder zusammen mit dem Benzolring für ein Tetralin-, Naphthalin- oder Benzdioxanringsystem und

m und n für 1 oder 2 stehen,

dadurch gekennzeichnet, daß man ein Amin der Formel

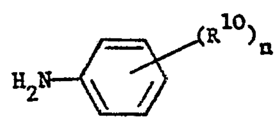

worin

$R^{10}$ und n die oben genannte Bedeutung haben,

und eine Verbindung der Formeln

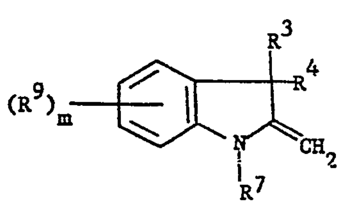

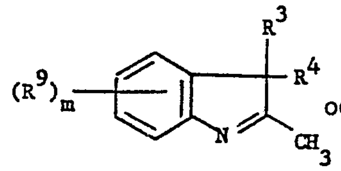 oder 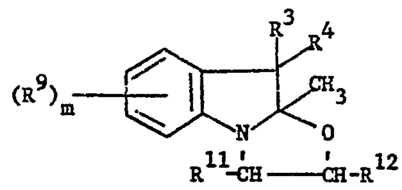

worin

$R^3$, $R^4$, $R^7$ bis $R^9$ und m die vorstehend genannte Bedeutung haben und

$R^{11}$ und $R^{12}$ für Wasserstoff, Alkyl oder Alkoxy mit 1 bis 4 Kohlenstoffatomen, Phenyl oder Phenoxy stehen,

mit einer salpetrige Säure abgebenden Substanz zur Reaktion bringt, und dann gegebenenfalls nach bekannten Verfahren mit einer Verbindung umsetzt, welche die Reste $R^7$ und/oder $R^8$, und $X^-$ bildet.

3. Verfahren gemäß Anspruch 2, dadurch gekennzeichnet, daß

m für 1,

n für 1 oder 2,

$R^3$ und $R^4$ für Methyl,

$R^7$ für Methyl, Ethyl, Acetoxyethyl oder Hydroxyethyl,

$R^8$ für Wasserstoff, Methyl oder Hydroxyethyl,

$R^9$ für H, $C_1$- bis $C_4$-Alkyl, $C_1$- bis $C_4$-Alkoxy, $C_1$- bis $C_2$-Alkoxycarbonyl, Chlor, Nitro und Benzyloxy,

$R^{10}$ für H, $C_1$- bis $C_4$-Alkyl, $C_1$- bis $C_4$-Alkoxy, Hydroxy-$C_2$- bis -$C_4$-alkoxy, Hydroxy-$C_2$- bis -$C_4$-alkyloxy-$C_2$- bis -$C_4$-alkoxy, Chlor, $C_1$- bis $C_4$-Alkoxy-$C_2$- bis -$C_4$-alkoxy, Phenoxy, Benzyloxy, Benzyl oder Phenylazo stehen oder

$R^{10}$ zusammen mit dem Benzolring ein Naphthalin- oder Benzdioxansystem bildet und

$R^{11}$ und $R^{12}$ Wasserstoff oder Methyl bedeuten.

4. Verfahren gemäß Anspruch 2, dadurch gekennzeichnet, daß

m und n 1,

$R^3$, $R^4$ und $R^7$ Methyl,

$R^8$ Wasserstoff oder Methyl,

$R^9$ und $R^{10}$ Wasserstoff, Chlor, Methyl, Ethyl, Methoxy oder Ethoxy bedeuten.

5. Verfahren gemäß Anspruch 1 zur Herstellung von Farbstoffen der Formel

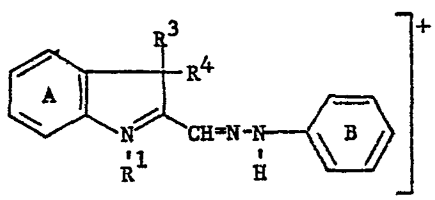

worin

$R^1$, $R^3$, $R^4$, A und B die in Anspruch 1 angegebene Bedeutung haben und

$X^-$ für das Anion einer aliphatischen Carbonsäure steht,

dadurch gekennzeichnet, daß man das Mengenverhältnis zwischen den Reaktionspartnern so wählt, daß am Ende der Einwirkung von Natriumnitrit unmittelbar eine stabile Farbstofflösung entsteht, indem man auf 1 mol der Ausgangskomponenten 5-20 mol, vorzugsweise 7 bis 12 mol, einer aliphatischen Carbonsäure einsetzt.

6. Verfahren gemäß Anspruch 1 zur Herstellung von Farbbasen der Formel

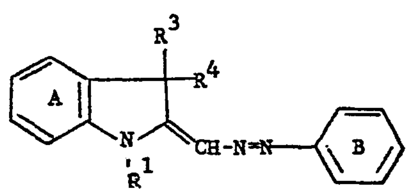

worin

$R^1$, $R^3$, $R^4$, A und B die in Anspruch 1 genannte Bedeutung haben,

dadurch gekennzeichnet, daß man aliphatische Carbonsäuren in verdünnter Lösung verwendet, die Lösungsmittel, Wasser oder Lösungsmittel/Wasser-Gemische enthält, wobei sich nach Einwirkung von $NaNO_2$ ein pH-Wert von $4 < pH < 6$ einstellt und die Farbbase ausfällt.

7. Verfahren zur Herstellung von Farbstoffen der Formel

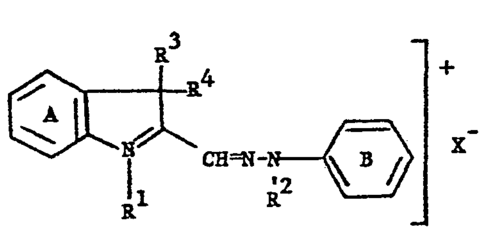

worin

$R^1$ und/oder $R^2$ Alkyl, Alkenyl oder Aralkyl bedeuten, und

$R^3$, $R^4$, A, B und $X^-$ die im Anspruch 1 genannte Bedeutung haben,

dadurch gekennzeichnet, daß man in Gegenwart einer Säure ein Amin der Formel

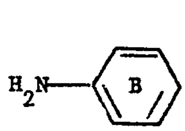

worin

B die in Anspruch 1 angegebene Bedeutung hat,

und eine Verbindung der Formeln

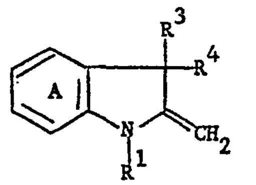 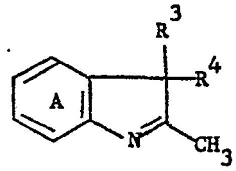 oder 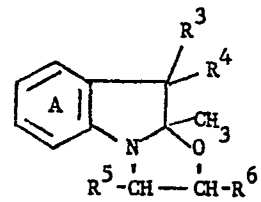

worin

$R^1$, $R^3$, $R^4$, $R^5$, $R^6$ und A die gleiche Bedeutung wie in Anspruch 1 besitzen,

mit einer salpetrige Säure abgebenden Substanz zur Reaktion bringt, gegebenenfalls neutralisiert und dann nach bekannten Verfahren mit einer Verbindung umsetzt, welche die Reste $R^1$ und/oder $R^2$, die die in Anspruch 1 angegebene Bedeutung haben, und $X^-$ bildet.

8. Verfahren gemäß Anspruch 7, dadurch gekennzeichnet, daß man die Reaktionsmischung vor der Quaternierung mit einem mit Wasser nicht mischbaren Lösungsmittel verdünnt und gegebenenfalls die wäßrige Phase abrennt.

9. Verfahren gemäß Ansprüchen 7 und 8, dadurch gekennzeichnet, daß man vor der Quaternierung bei pH-Werten von $4 < pH < 6$ arbeitet.

**Claims**

1. Process for the preparation of dyestuffs of the general formula

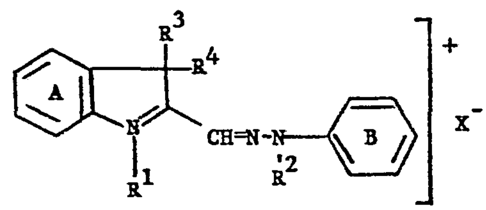

or colour bases of the general formula

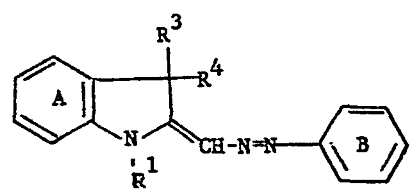

wherein

$R^1$ and $R^2$ denote hydrogen, alkyl, alkenyl or aralkyl,

$R^1$ only representing hydrogen when $R^2$ represents hydrogen,

$R^3$ and $R^4$ denote methyl or ethyl and

$X^-$ denotes an anion

and wherein

the rings A and B and the radicals $R^1$ and $R^2$ can carry non-ionic substituents and

the rings A and B can carry further fused-on rings,

characterised in that in the presence of an acid an amine of the formula

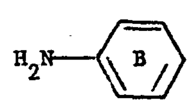

wherein

B has the meaning indicated above,

and a compound of the formula

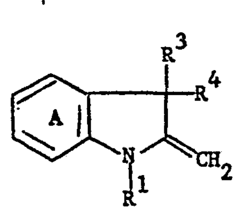 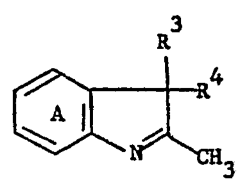 or 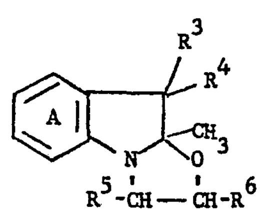

wherein

$R^1$, $R^3$, $R^4$ and A have the meanings indicated above,

$R^5$ and $R^6$ represent hydrogen, alkyl, alkoxy, phenoxy or phenyl,

are reacted with a substance which releases nitrous acid and, if appropriate, the product is then reacted according to known methods with a compound which forms the radicals $R^1$ and/or $R^2$, which represent alkyl, alkenyl or aralkyl, which are optionally substituted by non-ionic radicals, and $X^-$.

2. Process for the preparation of dyestuffs of the general formula

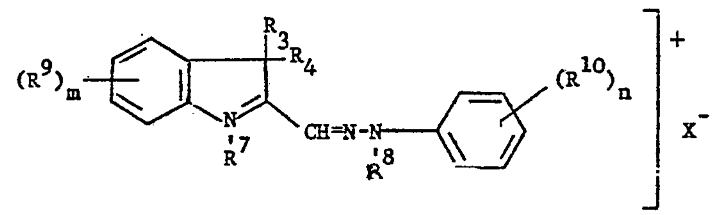

of colour bases of the formula

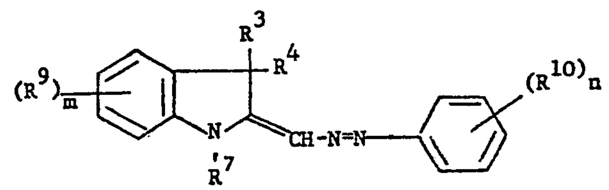

wherein

$R^3$, $R^4$ and $X^-$ have the same meaning as in Claim 1,

$R^7$ represents hydrogen or alkyl with 1 to 4 carbon atoms which can be substituted by halogen, hydroxyl, cyano, $C_1$- to $C_4$-alkoxy, $C_1$-$C_4$-alkylcarbonyloxy, phenoxy or phenyl, and

$R^8$ represents hydrogen or alkyl with 1 to 4 carbon atoms which can be substituted by hydroxyl, $R^7$ only representing hydrogen when $R^8$ represents hydrogen,

$R^9$ and $R^{10}$ represent hydrogen, halogen, alkyl or alkoxy with 1 to 4 C atoms, benzyl, benzyloxy, phenyl or phenoxy radicals, which can in turn be substituted by halogen, alkyl or alkoxy with 1 to 4 C atoms, or represent acetyl, benzoyl or carboxylic acid esters with 1 to 4 C atoms or

$R^{10}$ represents phenylazo or, together with the benzene ring, a tetralin, naphthalene or benzodioxane ring system, and

m and n represent 1 or 2,

characterised in that an amine of the formula

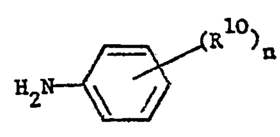

wherein

$R^{10}$ and n have the above-mentioned meaning,

and a compound of the formula

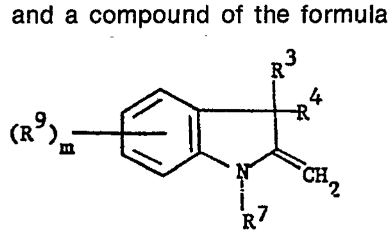

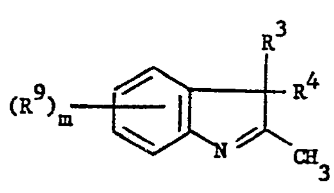

or

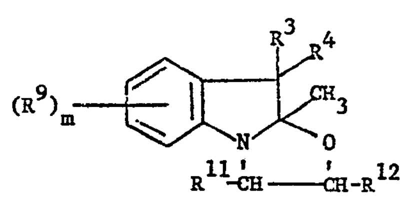

wherein

$R^3$, $R^4$, $R^7$ to $R^9$ and m have the above-mentioned meaning and

$R^{11}$ and $R^{12}$ represent hydrogen, alkyl or alkoxy with 1 to 4 carbon atoms, phenyl or phenoxy,

are reacted with a substance which releases nitrous acid, and, if appropriate, the product is then reacted according to known methods with a compound which forms the radicals $R^7$ and/or $R^8$, and $X^-$.

3. Process according to Claim 2, characterised in that

m represents 1,

n represents 1 or 2,

$R^3$ and $R^4$ represent methyl,

$R^7$ represents methyl, ethyl, acetoxyethyl or hydroxyethyl,

$R^8$ represents hydrogen, methyl or hydroxyethyl,

$R^9$ represents H, $C_1$- to $C_4$-alkyl, $C_1$- to $C_4$-alkoxy, $C_1$- to $C_2$-alkoxycarbonyl, chlorine, nitro and benzyloxy,

$R^{10}$ represents H, $C_1$- to $C_4$-alkyl, $C_1$- to $C_4$-alkoxy, hydroxy-$C_2$- to -$C_4$-alkoxy, hydroxy-$C_2$- to -$C_4$-alkyloxy-$C_2$- to -$C_4$-alkoxy, chlorine, $C_1$- to $C_4$-alkoxy-$C_2$- to -$C_4$-alkoxy, phenoxy, benzyloxy, benzyl or phenylazo or

$R^{10}$, together with the benzene ring, forms a naphthalene or benzodioxane system and

$R^{11}$ and $R^{12}$ denote hydrogen or methyl.

4. Process according to Claim 2, characterised in that

m and n denote 1,

$R^3$, $R^4$ and $R^7$ denote methyl,

$R^8$ denotes hydrogen or methyl,

$R^9$ and $R^{10}$ denote hydrogen, chlorine, methyl, ethyl, methoxy or ethoxy.

5. Process according to Claim 1 for the preparation of dyestuffs of the formula

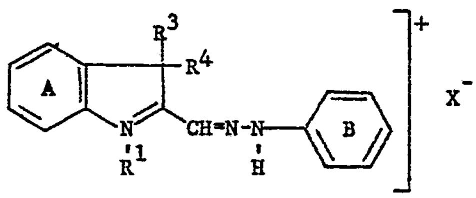

wherein

$R^1$, $R^3$, $R^4$, A and B have the meaning given in Claim 1, and

$X^-$ represents the anion of an aliphatic carboxylic acid,

characterised in that the ratio of the reactants is chosen such that a stable dyestuff solution is formed directly at the end of the action of sodium nitrite, by employing 5-20 mols, preferably 7 to 12 mols, of an aliphatic carboxylic acid per mol of starting components.

6. Process according to Claim 1 for the preparation of colour bases of the formula

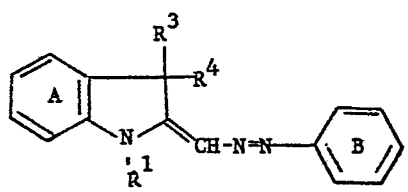

wherein

$R^1$, $R^3$, $R^4$, A and B have the meaning given in Claim 1,

characterised in that aliphatic carboxylic acids are used in dilute solution which contains a solvent, water or solvent/water mixtures, a pH value of 4-6 being established and the colour base precipitating, after the action of $NaNO_2$.

7. Process for the preparation of dyestuffs of the formula

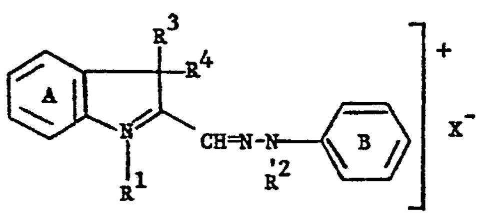

wherein

$R^1$ and/or $R^2$ denote alkyl, alkenyl or aralkyl, and

$R^3$, $R^4$, A, B and $X^-$ have the meaning indicated in Claim 1,

characterised in that an amine of the formula

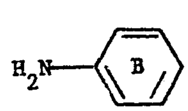

wherein

B has the meaning given in Claim 1, and a compound of the formula

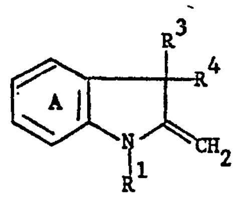 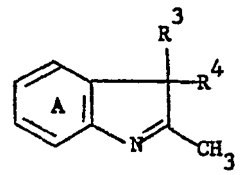 or 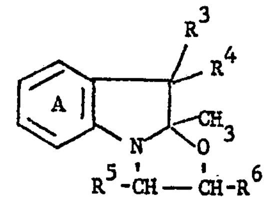

wherein

$R^1$, $R^3$, $R^4$, $R^5$, $R^6$ and A have the same meaning as in Claim 1,

are reacted, in the presence of an acid, with a substance which releases nitrous acid and the mixture is neutralised, if appropriate, and then reacted according to known methods with a compound which forms the radicals $R^1$ and/or $R^2$, which have the meaning given in Claim 1, and $X^-$.

8. Process according to Claim 7, characterised in that, before the quaternisation, the reaction mixture is diluted with a water-immiscible solvent and, if appropriate, the aqueous phase is separated off.

9. Process according to Claims 7 and 8, characterised in that, before the quaternisation, pH values of 4 to 6 are employed.

**Revendications**

1. Procédé de préparation de colorants de formule générale

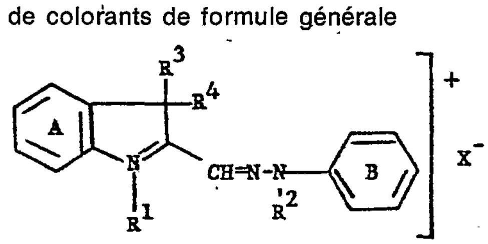

et de bases colorantes de formule générale

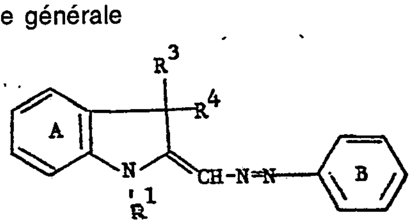

dans lesquelles

$R^1$ et $R^2$ représentent l'hydrogène, des groupes alkyle, alcényle ou aralkyle, $R^1$ ne pouvant représenter l'hydrogène que lorsque $R^2$ représente l'hydrogène,

$R^3$ et $R^4$ représentent des groupes méthyle ou éthyle, et

$X^-$ représente un anion, et dans lesquelles

les cycles A et B et les restes $R^1$ et $R^2$ peuvent porter des substituants non ioniques, et

les cycles A et B peuvent porter d'autres cycles condensés,

caractérisé en ce que l'on fait réagir, en présence d'un acide, une amine de formule

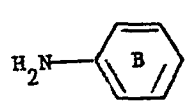

dans laquelle

B a les significations indiquées ci-dessus,

et un composé de formules

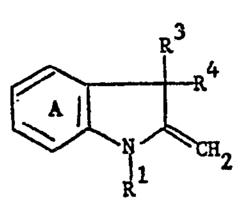 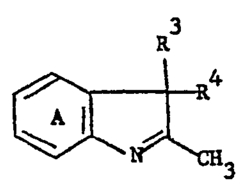 ou 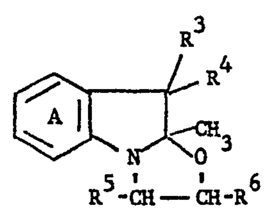

dans lesquelles

$R^1$, $R^3$, $R^4$ et A ont les significations indiquées ci-dessus,

$R^5$ et $R^6$ représentent l'hydrogène, des groupes alkyle, alcoxy, phénoxy ou phényle,

avec une substance libérant de l'acide nitreux, après quoi on fait réagir le cas échéant par des procédés connus avec un composé qui forme les restes $R^1$ et/ou $R^2$ représentant des groupes alkyle, alcényle ou aralkyle éventuellement substitués par des restes non ioniques, et $X^-$.

2. Procédé de préparation des colorants de formule générale

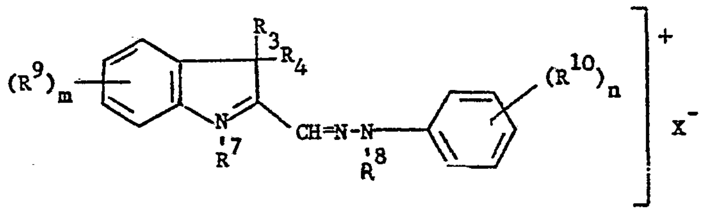

ou de bases colorantes de formule

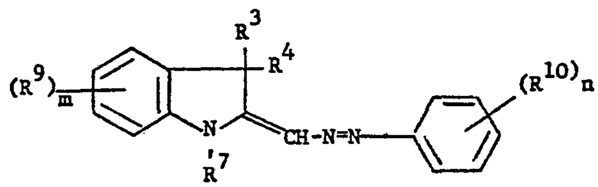

dans lesquelles

$R^3$, $R^4$ et $X^-$ ont les significations indiquées dans la revendication 1,

$R^7$ représente l'hydrogène ou un groupe alkyle en $C_1$-$C_4$ qui peut être substitué par des halogènes, des groupes hydroxy, cyano, alcoxy en $C_1$-$C_4$, (alkyle en $C_1$-$C_4$)-carbonyloxy, phénoxy ou phényle, et

$R^8$ représente l'hydrogène ou un groupe alkyle en $C_1$-$C_4$ qui peut être substitué par un groupe hydroxy, $R^7$ ne pouvant représenter l'hydrogène que lorsque $R^8$ représente l'hydrogène,

$R^9$ et $R^{10}$ représentent l'hydrogène, des halogènes, des groupes alkyle ou alcoxy en $C_1$-$C_4$, des restes benzyle, benzyloxy, phényle ou phényloxy qui peuvent eux-mêmes être substitués par des halogènes, des groupes alkyle ou alcoxy en $C_1$-$C_4$, des groupes acétyle, benzoyle ou ester d'acide carboxylique en $C_1$-$C_4$, ou bien

$R^{10}$ représente un groupe phénylazo ou forme avec le noyau benzénique un système cyclique de tétraline, de naphtaline ou de benzodioxanne, et

m et n sont égaux à 1 ou 2,

caractérisé en ce que l'on fait réagir une amine de formule

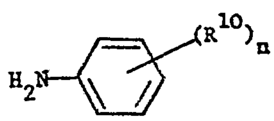

dans laquelle

$R^{10}$ et n ont les significations indiquées ci-dessus,

et un composé de formules

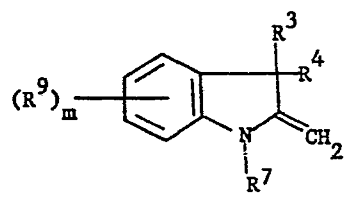

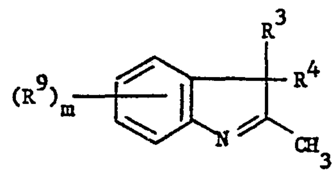

ou

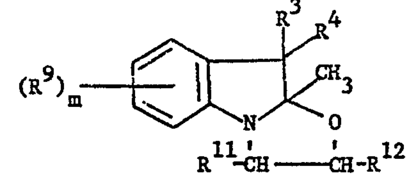

dans lesquelles

$R^3$, $R^4$, $R^7$ à $R^9$ et n ont les significations indiquées ci-dessus, et

$R^{11}$ et $R^{12}$ représentent l'hydrogène, des groupes alkyle ou alcoxy en $C_1$-$C_4$, phényle ou phénoxy, avec une substance libérant de l'acide nitreux, après quoi on fait réagir le cas échéant par des procédés connus avec un composé qui forme les restes $R^7$ et/ou $R^8$ et $X^-$.

3. Procédé selon la revendication 2, caractérisé en ce que

m est égal à 1

n est égal à 1 ou 2,

$R^3$ et $R^4$ représentent des groupes méthyle,

$R^7$ représente un groupe méthyle, éthyle, acétoxyéthyle ou hydroxyéthyle,

$R^8$ représente l'hydrogène, un groupe méthyle ou hydroxyéthyle,

$R^9$ représente H, un groupe alkyle en $C_1$-$C_4$, alcoxy en $C_1$-$C_4$, (alcoxy en $C_1$-$C_2$)-carbonyle, le chlore, un groupe nitro ou benzyloxy,

$R^{10}$ représente H, un groupe alkyle en $C_1$-$C_4$, alcoxy en $C_1$-$C_4$, hydroxyalcoxy en $C_2$-$C_4$, hydroxy-(alkyloxy en $C_2$-$C_4$)-alcoxy en $C_2$-$C_4$, le chlore, un groupe (alcoxy en $C_1$-$C_4$)-alcoxy en $C_2$-$C_4$, phénoxy, benzyloxy, benzyle ou phénylazo, ou bien

$R^{10}$ forme avec le noyau benzénique un système de naphtalène ou de benzodioxanne, et

$R^{11}$ et $R^{12}$ représentent l'hydrogène ou le groupe méthyle.

4. Procédé selon la revendication 2, caractérisé en ce que

m et n sont égaux à 1,

$R^3$, $R^4$ et $R^7$ représentent des groupes méthyle,

$R^8$ représente l'hydrogène ou un groupe méthyle,

$R^9$ et $R^{10}$ représentent l'hydrogène, le chlore, des groupes méthyle, éthyle, méthoxy ou éthoxy.

5. Procédé selon la revendication 1, pour la préparation de colorants de formule

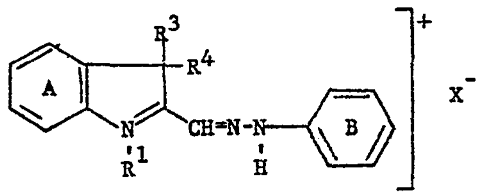

dans laquelle

$R^1$, $R^3$, $R^4$, A et B ont les significations indiquées dans la revendication 1, et

$X^-$ représente l'anion d'un acide carboxylique aliphatique,

caractérisé en ce que l'on choisit des proportions relatives entre les réactifs de manière que, à la fin de l'action du nitrite de sodium, il se forme directement une solution de colorant stable, en utilisant, pour 1 mole des composants de départ, de 5 à 20 moles, de préférence de 7 à 12 moles, d'un acide carboxylique aliphatique.

6. Procédé selon la revendication 1, pour la préparation de bases colorantes de formule

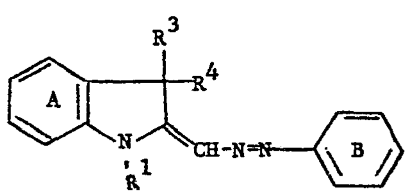

dans laquelle

$R^1$, $R^3$, $R^4$, A et B ont les significations indiquées dans la revendication 1,

caractérisé en ce que l'on utilise des acides carboxyliques aliphatiques en solution diluée contenant un solvant, de l'eau ou des mélanges solvants/eau, en sorte qu'après action de $NaNO_2$ il s'établisse un pH compris entre 4 et 6 et que la base colorante précipite.

7. Procédé de préparation de colorants de formule

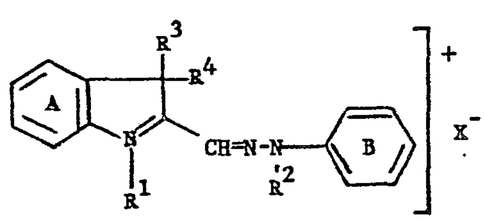

dans laquelle

$R^1$ et/ou $R^2$ représentent des groupes alkyle, alcényle ou aralkyle, et
$R^3$, $R^4$, A, B et $X^-$ ont les significations indiquées dans la revendication 1,
caractérisé en ce que l'on fait réagir, en présence d'un acide, une amine de formule

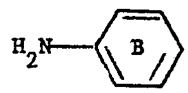

dans laquelle
B a les significations indiquées dans la revendication 1,
et un composé de formules

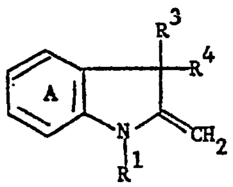
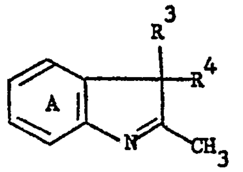
ou
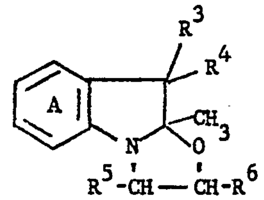

dans lesquelles
$R^1$, $R^3$, $R^4$, $R^5$, $R^6$ et A ont les significations indiquées dans la revendication 1,
avec une substance libérant de l'acide nitreux, on neutralise éventuellement puis on fait réagir par des procédés connus avec un composé qui forme les restes $R^1$ et/ou $R^2$ ayant la signification indiquée dans la revendication 1, et $X^-$.

8. Procédé selon la revendication 7, caractérisé en ce qu'on dilue le mélange de réaction avant la quaternisation par un solvant non miscible à l'eau et on sépare éventuellement la phase aqueuse.

9. Procédé selon les revendications 7 et 8, caractérisé en ce que, avant la quaternisation, on opère à des pH compris entre 4 et 6.